(19) Europäisches Patentamt
European Patent Office
Office européen des brevets

(11) Veröffentlichungsnummer: **0 012 110 B1**

# (12) EUROPÄISCHE PATENTSCHRIFT

(45) Veröffentlichungstag der Patentschrift: **01.02.84**

(51) Int. Cl.³: **C 08 K 5/00**, C 08 L 67/00, C 09 B 1/46

(21) Anmeldenummer: **79810158.0**

(22) Anmeldetag: **19.11.79**

(54) **Verfahren zum Färben thermoplastischer Kunststoffe in der Masse mit Anthrachinonylamino-triazinen.**

(30) Priorität: **23.11.78 CH 12027/78**

(43) Veröffentlichungstag der Anmeldung: **11.06.80 Patentblatt 80/12**

(45) Bekanntmachung des Hinweises auf die Patenterteilung: **01.02.84 Patentblatt 84/5**

(84) Benannte Vertragsstaaten: **CH DE FR GB IT**

(56) Entgegenhaltungen:
**DE - A - 1 644 532**
**DE - B - 1 191 060**
**FR - A - 2 086 035**
**GB - A - 1 373 910**

**CHEMICAL ABSTRACTS, Band 84, Nr. 26, 28. Juni 1976, Zusammenfassung Nr. 180931v, Seite 21 Columbus, Ohio, USA, T. KONSTANTINOVA et al.: "On the synthesis of colored unsaturated polyester resins in the presence of dyes, derivatives of 1,3,5-triazine"**
**CHEMICAL ABSTRACTS, Band 85, Nr. 26, 27. Dezember 1976, Zusammenfassung Nr. 193386s, Seite 18, Columbus, Ohio, USA, T. KONSTANTINOVA et al.: "On the synthesis of colored unsaturated polyester resins in the presence of dyes, derivatives of symtriazine"**

(73) Patentinhaber: **CIBA-GEIGY AG, Patentabteilung Postfach, CH-4002 Basel (CH)**

(72) Erfinder: **Dazzi, Joachim, Dr., Rütiring 32, CH-4125 Riehen (CH)**
Erfinder: **Jost, Max, Rebgartenweg 20, CH-4104 Oberwil (CH)**
Erfinder: **Wick, Arnold, Dr., Dahlienstrasse 5, CH-4106 Therwil (CH)**

(56) Entgegenhaltungen: (Fortsetzung)
**Die Akte enthält technische Angaben, die nach dem Eingang der Anmeldung eingereicht wurden und die nicht in dieser Patentschrift enthalten sind.**

EP 0 012 110 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zum Färben thermoplastischer Kunststoffe in der Masse mit Anthrachinonylamino-triazinen

Die Erfindung betrifft ein Verfahren zum Färben thermoplastischer Kunststoffe in der Masse mit Anthrachinonylaminotriazinen der Formel

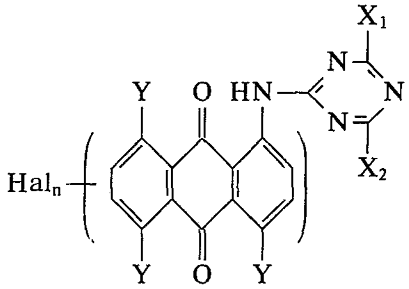

(1)

worin $X_1$ und $X_2$ eine Alkylmercapto- oder Arylmercaptogruppe oder eine Gruppe der Formel $-NR_1R_2$ bedeuten, worin $R_1$ und $R_2$ Alkyl-, Cycloalkyl-, Aralkyl- oder gegebenenfalls durch Chloratome, Alkyl- oder Alkoxygruppen mit 1–6 C-Atomen substituierte Phenylgruppen bedeuten und $R_2$ außerdem noch H sein kann oder worin die Reste $R_1$ und $R_2$ zusammen mit dem N-Atom und gegebenenfalls einem weiteren Heteroatom einen 5- oder 6-gliedrigen Heteroring, ein Y für ein H- oder Chloratom, eine Hydroxy-, Arylmercapto-, Alkanoylamino- oder Aroylaminogruppe, oder eine Grupe der Formel

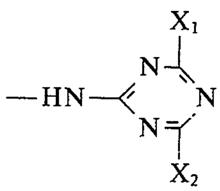

und die andern Y für H-Atome, Hal für ein Chlor- oder Bromatom und n für 0 oder 1 stehen.

Sofern in Formel (1) $X_1$ und $X_2$ Alkylmercaptogruppen bedeuten, handelt es sich vorzugsweise um solche mit 1 bis 6 C-Atomen. Als Arylmercaptogruppen kommen beispielsweise Naphthylmercaptogruppen und insbesondere gegebenenfalls durch Chloratome, Alkyl- oder Alkoxygruppen mit 1 bis 6 C-Atomen substituierte Phenylmercaptogruppen, in Betracht. Bedeuten $X_1$ und $X_2$ Gruppen der Formel $-NR_1R_2$, so stehen $R_1$ und $R_2$ vorzugsweise für Alkylgruppen mit 1 bis 20 C-Atomen, Alkoxyalkylgruppen, Cycloalkylgruppen mit 5 bis 10 C-Atomen, Benzyl oder Phenyläthylgruppen oder gegebenenfalls durch Chloratome, Alkyl-oder Alkoxygruppen mit 1 bis 6 C-Atomen substituierte Phenylgruppen, wobei $R_2$ außerdem noch H sein kann.

Die beiden Reste $R_1$ und $R_2$ können auch zusammen mit dem N-Atom beispielsweise einen Piperidin- oder Morpholinring bilden.

Sofern Y eine Arylmercaptogruppe bedeutet, dann vorzugsweise eine Phenylmercaptogruppe, die durch Chloratome, Alkyl- oder Alkoxygruppen mit 1 bis 6 C-Atomen substituiert sein kann.

Y kann auch für eine Alkanoylamingruppe mit 2 bis 6 C-Atomen oder eine gegebenenfalls durch Chloratome, Alkyl- oder Alkoxygruppen mit 1 bis 6 C-Atomen substituierte Benzoylaminogruppe stehen, insbesondere aber für ein H-Atom oder eine OH-Gruppe, n bedeutet vorzugsweise 0.

Die erfindungsgemäß zu verwendenden Anthrachinonylaminotriazine stellen bekannte Verbindungen dar. Man erhält sie vorteilhaft durch Kondensation eines Chlortriazins der Formel

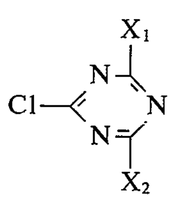

(2)

mit dem entsprechenden Aminoanthrachinon, beispielsweise

1-Aminoanthrachinon,
1-Amino-3-, -4-, -5-, -6- oder -7-chloranthrachinon,
1-Amino-4-hydroxyanthrachinon,
1-Amino-4-, -5- oder -8-phenylmercapto-anthrachinon,
1-Amino-4- oder -5-acetylaminoanthrachinon,
1-Amino-4- oder -5-benzoylaminoanthrachinon.

Die Triazine der Formel (2) erhält man durch stufenweisen Austausch von zwei Chloratomen im Cyanurchlorid durch die Amine oder Mercaptane $X_1H$ und $X_2H$.

Als Beispiele seien die folgenden Amine genannt:

Methyl-, Äthyl-, n-Propyl-, Isopropyl-, n-Butyl-, Isobutyl-, sek.-Butyl-, n-Hexyl-, n-Octyl-, n-Decyl-, n-Dodecyl-, n-Hexadecyl- oder n-Octadecylamin, Dimethyl-, Diäthyl-, Di-n-propyl- oder Di-n-butylamin, β-Methoxyäthyl, γ-Methoxy-n-propyl- oder γ-Isopropoxy-n-propylamin, Cyclohexylamin, Dicyclohexylamin, Benzylamin, Phenyläthylamin, Anilin, o-, m- oder p-Toluidin, N-Methyl-Äthyl- oder -n-Butylanilin, 1-Aminonaphthalin, Piperidin oder Morpholin.

In der nachfolgenden Tabelle I sind einige Anthrachinonylaminotriazine der Formel

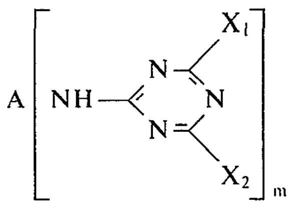

(3)

genannt, worin A den 1-Anthrachinonylrest, m die Zahl 1 bedeutet und die Bedeutung von $X_1$ und $X_2$ aus den Kolonnen II und III hervorgeht.

Tabelle I

| No. | $X_1$ | $X_2$ |
|---|---|---|
| 1 | β-methoxyäthylamino | β-methoxyäthylamino |
| 2 | γ-methoxypropylamino | γ-methoxypropylamino |
| 3 | γ-isopropoxy-propylamino | γ-isopropoxy-propylamino |
| 4 | benzylamino | benzylamino |
| 5 | phenyläthylamino | phenyläthylamino |
| 6 | n-hexadecylamino | n-hexadecylamino |
| 7 | n-octadecylamino | n-octadecylamino |
| 8 | methylamino | äthylamino |
| 9 | methylamino | n-butylamino |
| 10 | methylamino | n-hexadecylamino |
| 11 | äthylamino | n-octadecylamino |
| 12 | methylamino | dimethylamino |
| 13 | methylamino | diäthylamino |
| 14 | methylamino | di-n-propylamino |
| 15 | methylamino | di-n-butylamino |
| 16 | äthylamino | dimethylamino |
| 17 | methylamino | anilino |
| 18 | äthylamino | anilino |
| 19 | isopropylamino | anilino |
| 20 | n-butylamino | anilino |

Fortsetzung

| No. | $X_1$ | $X_2$ |
|---|---|---|
| 21 | n-hexadecylamino | anilino |
| 22 | n-octadecylamino | anilino |
| 23 | methylamino | N-methyl-anilino |
| 24 | äthylamino | N-methyl-anilino |
| 25 | dimethylamino | diäthylamino |
| 26 | dimethylamino | diisopropylamino |
| 27 | dimethylamino | di-n-butylamino |
| 28 | dimethylamino | N-methyl-anilino |
| 29 | di-isopropylamino | N-methyl-anilino |
| 30 | di-n-butylamino | N-methyl-anilino |
| 31 | anilino | N-methyl-anilino |
| 32 | anilino | N-äthyl-anilino |
| 33 | N-methyl-anilino | N-äthyl-anilino |
| 34 | äthylmercapto | methylmercapto |
| 35 | äthylmercapto | n-propylmercapto |
| 36 | äthylmercapto | n-butylmercapto |
| 37 | äthylmercapto | n-hexadecylmercapto |
| 38 | äthylmercapto | n-octadecylmercapto |
| 39 | methylmercapto | phenylmercapto |
| 40 | äthylmercapto | phenylmercapto |
| 41 | anilino | phenylmercapto |
| 42 | N-methylanilino | phenylmercapto |
| 43 | N-äthylanilino | phenylmercapto |
| 44 | methylamino | methylmercapto |
| 45 | methylamino | äthylmercapto |
| 46 | methylamino | n-propylmercapto |
| 47 | methylamino | n-butylmercapto |
| 48 | methylamino | n-hexadecylmercapto |
| 49 | methylamino | n-octadecylmercapto |
| 50 | äthylamino | methylmercapto |

Fortsetzung

| No. | $X_1$ | $X_2$ |
|---|---|---|
| 51 | diäthylamino | methylmercapto |
| 52 | dimethylamino | methylmercapto |
| 53 | dimethylamino | äthylmercapto |
| 54 | diäthylamino | äthylmercapto |
| 55 | di-n-butylamino | äthylmercapto |
| 56 | dimethylamino | n-propylmercapto |
| 57 | anilino | methylmercapto |
| 58 | anilino | äthylmercapto |
| 59 | anilino | n-propylmercapto |
| 60 | anilino | n-butylmercapto |
| 61 | anilino | n-hexadecylmercapto |
| 62 | anilino | n-octadecylmercapto |
| 63 | N-methylanilino | methylmercapto |
| 64 | N-äthylanilino | methylmercapto |

In der nachfolgenden Tabelle II sind weitere Anthrachinonylaminotriazine der Formel (3) genannt, worin m die Zahl 2, A den in Kolonne II angegebenen Stellungen mit den Triazinylaminogruppen verbundenen Anthrachinonrest bedeutet, und worin $X_1$ und $X_2$ die in den Kolonnen III und IV angegebene Bedeutung haben.

Tabelle II

| No. | Stellungen | $X_1$ | $X_2$ |
|---|---|---|---|
| 65 | 1,4 | $\beta$-methoxyäthylamino | $\beta$-methoxyäthylamino |
| 66 | 1,5 | $\beta$-methoxyäthylamino | $\beta$-methoxyäthylamino |
| 67 | 1,4 | $\beta$-methoxypropylamino | $\gamma$-methoxypropylamino |
| 68 | 1,5 | $\gamma$-methoxypropylamino | $\gamma$-methoxypropylamino |
| 69 | 1,4 | $\gamma$-isopropoxy-propylamino | $\gamma$-isopropoxy-propylamino |
| 70 | 1,5 | $\gamma$-isopropoxy-propylamino | $\gamma$-isopropoxy-propylamino |
| 71 | 1,4 | benzylamino | benzylamino |
| 72 | 1,5 | benzylamino | benzylamino |
| 73 | 1,4 | n-hexadecylamino | n-hexadecylamino |
| 74 | 1,5 | n-hexadecylamino | n-hexadecylamino |
| 75 | 1,4 | methylamino | methylamino |

Fortsetzung

| No. | Stellungen | $X_1$ | $X_2$ |
|---|---|---|---|
| 76 | 1,5 | methylamino | methylamino |
| 77 | 1,4 | butylamino | butylamino |
| 78 | 1,5 | butylamino | butylamino |
| 79 | 1,4 | dimethylamino | dimethylamino |
| 80 | 1,5 | dimethylamino | dimethylamino |
| 81 | 1,4 | morpholyl | morpholyl |
| 82 | 1,5 | morpholyl | morpholyl |
| 83 | 1,4 | anilino | anilino |
| 84 | 1,5 | anilino | anilino |
| 85 | 1,4 | phenylmercapto | phenylmercapto |
| 86 | 1,5 | phenylmercapto | phenylmercapto |
| 87 | 1,4 | n-butylmercapto | n-butylmercapto |
| 88 | 1,5 | n-butylmercapto | n-butylmercapto |
| 89 | 1,4 | n-hexadecylmercapto | n-hexadecylmercapto |
| 90 | 1,5 | n-hexadecylmercapto | n-hexadecylmercapto |
| 91 | 1,4 | n-octadecylmercapto | n-octadecylmercapto |
| 92 | 1,5 | n-octadecylmercapto | n-octadecylmercapto |
| 93 | 1,4 | methylamino | anilino |
| 94 | 1,5 | methylamino | anilino |
| 95 | 1,4 | methylamino | N-methylanilino |
| 96 | 1,5 | methylamino | N-methylanilino |
| 97 | 1,4 | dimethylamino | anilino |
| 98 | 1,5 | dimethylamino | anilino |
| 99 | 1,4 | methylmercapto | anilino |
| 100 | 1,5 | methylmercapto | anilino |
| 101 | 1,4 | methylmercapto | N-methylanilino |
| 102 | 1,5 | methylmercapto | N-methylanilino |
| 103 | 1,4 | n-butylmercapto | anilino |
| 104 | 1,5 | n-butylmercapto | anilino |
| 105 | 1,4 | n-octadecylmercapto | anilino |

Fortsetzung

| No. | Stellungen | $X_1$ | $X_2$ |
|---|---|---|---|
| 106 | 1,5 | n-octadecylmercapto | anilino |
| 107 | 1,4 | methylmercapto | phenylmercapto |
| 108 | 1,5 | methylmercapto | phenylmercapto |
| 109 | 1,4 | n-butylmercapto | phenylmercapto |
| 110 | 1,5 | n-butylmercapto | phenylmercapto |
| 111 | 1,4 | methylmercapto | n-hexadecylmercapto |
| 112 | 1,5 | methylmercapto | n-hexadecylmercapto |
| 113 | 1,4 | methylamino | dimethylamino |
| 114 | 1,5 | methylamino | dimethylamino |
| 115 | 1,4 | methylmercapto | morpholinyl |
| 116 | 1,5 | methylmercapto | morpholinyl |
| 117 | 1,4 | n-hexadecylamino | anilino |
| 118 | 1,5 | n-hexadecylamino | anilino |
| 119 | 1,4 | isopropylamino | anilino |
| 120 | 1,5 | isopropylamino | anilino |
| 121 | 1,4 | anilino | N-methylanilino |
| 122 | 1,5 | anilino | N-methylanilino |
| 123 | 1,4 | methylamino | methylmercapto |
| 124 | 1,5 | methylamino | methylmercapto |
| 125 | 1,4 | dimethylamino | methylamino |
| 126 | 1,5 | dimethylamino | methylamino |
| 127 | 1,4 | dimethylamino | methylmercapto |
| 128 | 1,5 | dimethylamino | methylmercapto |
| 129 | 1,5 | äthylamino | butylamino |

In der nachfolgenden Tabelle III sind Verbindungen der Formel

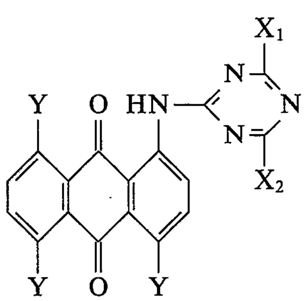

(4)

aufgeführt, worin $X_1$ und $X_2$ die in Kolonne II und III und Y die in Kolonne IV angegebene Bedeutung haben. Kolonne V gibt die Stellung von Y an.

Tabelle III

| No. | $X_1$ | $X_2$ | Y | Stellung |
|---|---|---|---|---|
| 130 | äthylamino | butylamino | hydroxy | 4 |
| 131 | cyclohexylamino | cyclohexylamino | hydroxy | 4 |
| 132 | dimethylamino | dimethylamino | 2,4-bisanilino-triazinyl-6-amino | 4 |
| 133 | N-methylanilino | phenylamino | 2,4-bisäthyl-aminotriazinyl-6-amino | 4 |
| 134 | N-methylanilino | phenylamino | 2,4-bisäthyl-aminotriazinyl-6-amino | 5 |
| 135 | N-methylanilino | phenylamino | 2,4-bisphenyl-mercapto-triazinyl-6-amino | 4 |

Es können auch Mischungen verschiedener Farbstoffe verwendet werden.

Als thermoplastische Kunststoffe seien Polyolefine, wie Polyäthylen, Polypropylen- oder Polyisobutylen, ferner Polyvinylchlorid, Polystyrol, sowie Copolymerisate des Styrols, wie ABS, insbesondere aber lineare Polyester erwähnt.

Als lineare Polyester seien insbesondere jene erwähnt, die durch Polykondensation von Terephthalsäure oder deren Estern mit Glykolen der Formel $HO-(CH_2)_n-OH$, worin n die Zahl 2–10 bedeutet, oder mit 1,2-Di(hydroxymethyl)-cyclohexan oder durch Polykondensation von Glykoläthern von Hydroxybenzoesäuren, beispielsweise p-(β-Hydroxyäthoxy)-benzoesäure erhalten werden. Der Begriff lineare Polyester umfaßt auch Copolyester, die durch teilweisen Ersatz der Terephthalsäure durch eine andere Dicarbonsäure oder eine Hydroxycarbonsäure und/oder durch teilweisen Ersatz des Glycols durch ein anderes Diol erhalten werden.

Von besonderem Interesse sind jedoch die Polyäthylenterephthalate.

Die Färbung erfolgt nach den üblichen Verfahren, beispielsweise durch Mischen der Farbstoffe mit dem Kunststoffgranulat oder -pulver und Extrudieren der Mischung zu Fasern, Folien oder Granulaten. Letztere können dann im Spritzgußverfahren zu Gegenständen verformt werden.

Die erhaltenen Färbungen, insbesondere in PES zeichnen sich durch gute Licht-, Wasch-, Trockenreinigung-, Überfärbe-, Thermofixier-, Ausblut- und Chloritechtheit, sowie durch reine Farbtöne und gute Farbstärke aus.

In der SU-PS 192 993 und in der DE-AS 1 644 532 sind Anthrachinonfarbstoffe beschrieben, die in 4-Stellung eine Arylaminogruppe aufweisen. Demgegenüber zeichnen sich die erfindungsgemäß zu verwendenden Farbstoffe dadurch aus, Polyesterfärbungen mit deutlich besserer Lichtechtheit und Wetterechtheit zu ergeben.

In den nachfolgenden Beispielen bedeuten die Teile Gewichtsteile und die Prozente Gewichtsprozente und die Temperaturen sind in Celsiusgraden angegeben.

## Beispiel 1

Ein zur Faserherstellung geeignetes unmattiertes Polyäthylenterephthalat-Granulat wird in einem verschließbaren Gefäß zusammen mit 1% 1-(2',4'-Bis-N-methyl-N-phenylamino-1',3',5'-triazinyl-6')-aminoanthrachinon auf einer Schüttelmaschine 15 Minuten geschüttelt. Die gleichmäßig gefärbten Granulatkörner werden auf einer Schmelzspinnanlage (285° ± 3°, Verweilzeit in der Spinnmaschine ca. 5 Minuten) zu Fäden versponnen, die auf einer Streckzwirnanlage verstreckt und aufgespult werden. Man erhält infolge der Löslichkeit des Farbstoffs in Polyäthylenterephthalat eine kräftige gelbe Färbung, die sich durch hervorragende Lichtechtheit, vorzügliche Wasch-, Trockenreinigungs-, Überfärbe-, Sublimations- und Reibechtheit nach Thermofixierung sowie hohe Chloritbleichbeständigkeit und gute Faserviskositätswerte auszeichnet.

Beispiel 2

1000 Teile Polyäthylenterephthalat-Granulat, 10 Teile Titanoxid (Kronos RN 40) und 1 Teil fein verteiltes 1-(2',4'-Bis-N-methyl-N-phenylamino-1',3',5'-triazinyl-6')-amino-4-hydroxyanthrachinon werden in einem verschlossenen Gefäß 2 Stunden auf dem Rollbock vermischt. Das eingefärbte Granulat wird bei ca. 260° in Strängen von 2 mm extrudiert und wieder granuliert. Das erhaltene Granulat wird im Ankerschneckenspritzgußautomat bei 270 bis 280° zu Formlingen verspritzt. Man erhält einen rot gefärbten Formling von sehr guter Lichtbeständigkeit.

Beispiele 3–42

In der nachfolgenden Tabelle IV sind weitere Farbstoffe der Formel (3) aufgeführt, die nach dem in den Beispielen 1 und 2 beschriebenen Verfahren zum Färben von Polyäthylenterephthalat verwendet wurden. A bedeutet den Anthrachinonylrest. Die Bedeutung von $X_1$, $X_2$ und m geht aus den Kolonnen II, III und IV hervor. In Kolonne V ist die Stellung der Triazinylaminogruppe im Anthrachinonrest angegeben.

Tabelle IV

| Beispiel No. | $X_1$ | $X_2$ | m | Stellung | Farbe |
|---|---|---|---|---|---|
| 3 | methylamino | methylamino | 1 | 1 | gelb |
| 4 | methylamino | methylamino | 2 | 1,5 | gelb-orange |
| 5 | äthylamino | äthylamino | 1 | 1 | gelb |
| 6 | äthylamino | äthylamino | 2 | 1,5 | gelb-orange |
| 7 | n-butylamino | n-butylamino | 1 | 1 | gelb |
| 8 | dimethylamino | dimethylamino | 1 | 1 | gelb |
| 9 | diäthylamino | diäthylamino | 1 | 1 | gelb |
| 10 | diisopropylamino | diisopropylamino | 1 | 1 | gelb |
| 11 | di-n-butylamino | di-n-butylamino | 1 | 1 | gelb |
| 12 | piperidyl | piperidyl | 1 | 1 | gelb |
| 13 | morpholyl | morpholyl | 1 | 1 | gelb |
| 14 | anilino | anilino | 1 | 1 | gelb |
| 15 | N-methylanilino | N-methylanilino | 1 | 1 | gelb |
| 16 | N-methylanilino | N-methylanilino | 2 | 1,4 | violett |
| 17 | N-methylanilino | N-methylanilino | 2 | 1,5 | rotstichig gelb |
| 18 | diphenylamino | diphenylamino | 1 | 1 | gelb |
| 19 | phenylmercapto | phenylmercapto | 1 | 1 | gelb |
| 20 | methoxy-propionylamino | methoxy-propionylamino | 1 | 1 | gelb |
| 21 | isopropoxy-propylamino | isopropoxy-propylamino | 1 | 1 | gelb |
| 22 | methoxyäthyl-amino | methoxyäthyl-amino | 1 | 1 | gelb |

Fortsetzung

| Beispiel No. | $X_1$ | $X_2$ | m | Stellung | Farbe |
|---|---|---|---|---|---|
| 23 | amino | amino | 1 | 1 | gelb |
| 24 | benzylamino | benzylamino | | 1 | gelb |
| 25 | phenyläthylamino | phenyläthylamino | 1 | 1 | gelb |
| 26 | diisopropylamino | diisopropylamino | 2 | 1,5 | orange |
| 27 | diisopropylamino | phenylmercapto | 1 | 1 | gelb |
| 28 | diisopropylamino | p-toluidino | 1 | 1 | gelb |
| 29 | dimethylamino | methylmercapto | 1 | 1 | gelb |
| 30 | methylmercapto | methylmercapto | 1 | 1 | gelb |
| 31 | methylmercapto | butyl-2-mercapto | 1 | 1 | gelb |
| 32 | methylmercapto | methylmercapto | 2 | 1,5 | rotstichig gelb |
| 33 | N-methylanilino | N-methylanilino | 2 | 1,8 | rotstichig gelb |
| 34 | methylmercapto | anilino | 1 | 1 | gelb |
| 35 | methylmercapto | methylmercapto | 1 | 1 | grünstichig gelb |
| 36 | methylmercapto | o-phenetidino | 1 | 1 | grünstichig gelb |
| 37 | methylmercapto | p-phenetidino | 1 | 1 | gelb |
| 38 | methylmercapto | 4-chlorphenylmercapto | 1 | 1 | gelb |
| 39 | methylmercapto | 2,5-dichlorphenyl | 1 | 1 | gelb |
| 40 | methylmercapto | 4-methylphenyl | 1 | 1 | gelb |
| 41 | phenylmercapto | morpholino | 1 | 1 | gelb |
| 42 | phenylmercapto | cyclohexyl-1-amino | 1 | 1 | gelb |

Beispiele 43—83

In der nachfolgenden Tabelle VI sind weitere Farbstoffe der Formel (4) aufgeführt, die nach dem in den Beispielen 1 und 2 beschriebenen Verfahren zum Färben von Polyäthylenterephthalat verwendet wurden. A bedeutet den Anthrachinonylrest. Die Bedeutung von $X_1$, $X_2$ und Y geht aus den Kolonnen II, III und IV hervor. In Kolonne V ist die Stellung von Y im Anthrachinonylrest und in Kolonne VI die Farbe der gefärbten Polyesterfasern angegeben.

Tabelle V

| Beispiel No. | $X_1$ | $X_2$ | Y | Stellung | Farbe |
|---|---|---|---|---|---|
| 43 | äthylamino | äthylamino | hydroxy | 4 | rot |
| 44 | äthylamino | äthylamino | benzoylamino | 4 | rotstichig gelb |
| 45 | anilino | anilino | hydroxy | 4 | rot |
| 46 | N-methyl-anilino | N-methyl-anilino | hydroxy | 4 | rot |
| 47 | N-methyl-anilino | N-methyl-anilino | benzoylamino | 4 | rot |
| 48 | N-methyl-anilino | N-methyl-anilino | benzoylamino | 5 | rotstichig gelb |
| 49 | N-methyl-anilino | N-methyl-anilino | phenylmercapto | 4 | rot |
| 50 | N-methyl-anilino | N-methyl-anilino | phenylmercapto | 5 | gelb |
| 51 | butylamino | butylamino | benzoylamino | 4 | rot |
| 52 | cyclohexyl-amino | cyclohexyl-amino | benzoylamino | 4 | bordeaux |
| 53 | diäthylamino | diäthylamino | benzoylamino | 4 | bordeaux |
| 54 | diisopropyl-amino | diisopropyl-amino | hydroxy | 4 | rot |
| 55 | methylmercapto | methylmercapto | 4-chlorbenzoyl-amino | 4 | rot |
| 56 | methylmercapto | butyl-2-mercapto | 4-chlorbenzoyl-amino | 4 | rot |
| 57 | methylmercapto | dimethylamino | phenylmercapto | 5 | gelb |
| 58 | methylamino | methylamino | phenylmercapto | 5 | bräunlich-gelb |
| 59 | N-methyl-anilin | N-methyl-anilino | phenylmercapto | 5 | gelb |
| 60 | N-methyl-anilino | N-methyl-anilino | 4-chlorphenyl-mercapto | 5 | gelb |
| 61 | N-methyl-anilin | N-methyl-anilin | phenylmercapto | 8 | gelb |
| 62 | methylmercapto | anilino | chlor | 3 | grünstichig gelb |
| 63 | methylmercapto | 2-chloranilino | chlor | 3 | grünstichig gelb |

Fortsetzung

| Beispiel No. | $X_1$ | $X_2$ | Y | Stellung | Farbe |
|---|---|---|---|---|---|
| 64 | methylmercapto | 3-chloranilino | chlor | 3 | grünstichig gelb |
| 65 | methylmercapto | anilino | chlor | 4 | gelb |
| 66 | methylmercapto | o-anisidino | chlor | 4 | gelb |
| 67 | methylmercapto | p-anisidino | chlor | 4 | gelb |
| 68 | methylmercapto | anilino | chlor | 5 | gelb |
| 69 | methylmercapto | o-toluidino | chlor | 5 | gelb |
| 70 | p-toluidino | p-toluidino | chlor | 5 | gelb |
| 71 | methylmercapto | anilino | chlor | 6 (7) | gelb |
| 72 | methylmercapto | p-chloranilino | chlor | 6 (7) | gelb |
| 73 | methylmercapto | m-toluidino | chlor | 6 (7) | gelb |
| 74 | dimethylamino | dimethylamino | 2-chlorbenzoylamino | 4 | rot |
| 75 | dimethylamino | dimethylamino | 3-chlorbenzoylamino | 4 | bordeaux |
| 76 | dimethylamino | dimethylamino | 2-fluorbenzoylamino | 4 | bordeaux |
| 77 | dimethylamino | dimethylamino | acetylamino | 4 | bordeaux |
| 78 | methylmercapto | phenylmercapto | hydroxy | 4 | rot |
| 79 | methylmercapto | phenylmercapto | benzoylamino | 4 | rot |
| 80 | methylmercapto | phenylmercapto | benzoylamino | 5 | gelb |
| 81 | phenylmercapto | cyclohexylamino | hydroxy | 4 | rot |
| 82 | phenylmercapto | morpholino | hydroxy | 4 | rot |

**Patentansprüche**

1. Färben thermoplastischer Kunststoffe in der Masse, dadurch gekennzeichnet, daß man als Farbstoffe Anthrachinonylaminotriazine der Formel

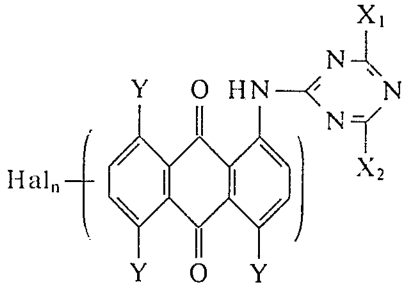

(1)

worin $X_1$ und $X_2$ eine Alkylmercapto- oder Arylmercaptogruppe oder eine Gruppe der Formel $-NR_1R_2$ bedeuten, worin $R_1$ und $R_2$ Alkyl-, Cycloalkyl-, Aralkyl- oder gegebenenfalls durch Chloratome, Alkyl- oder Alkoxygruppen mit 1–6 C-Atomen substituierte Phenylgruppen bedeuten und $R_2$ außerdem noch H sein kann oder worin die Reste $R_1$ und $R_2$ zusammen mit dem N-Atom und gegebenenfalls einem weiteren Heteroatom einen 5- oder 6-gliedrigen Heteroring bilden,
ein Y für ein H- oder Chloratom, eine Hydroxy-, Arylmercapto-, Alkanoylamino- oder Aroylaminogruppe oder eine Gruppe der Formel

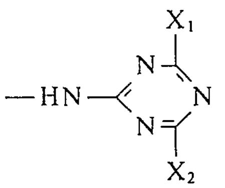

und die anderen Y für ein H-Atom,
Hal für ein Chlor- oder Bromatom und
n für 0 oder 1 stehen.

2. Verfahren gemäß Anspruch 1, dadurch gekennzeichnet, daß man von einer Verbindung der Formel (1) ausgeht, worin $X_1$ und $X_2$ Gruppen der Formel $-NR_1R_2$ bedeuten, worin $R_1$ und $R_2$ Alkylgruppen mit 1 bis 20 C-Atomen, Alkoxyalkylgruppen, Cycloalkylgruppen mit 5–6 C-Atomen, Benzyl- oder Phenyläthergruppen oder gegebenenfalls durch Chloratome, Alkyl- oder Alkoxygruppen mit 1 bis 6 C-Atomen substituierte Phenylgruppen darstellen und $R_2$ außerdem noch H sein kann.

3. Verfahren gemäß Anspruch 1, dadurch gekennzeichnet, daß man von einer Verbindung der Formel (1) ausgeht, worin $X_1$ eine Alkylmercaptogruppe mit 1–6 C oder der Gruppen der Formel $-NR_1R_2$ bedeutet, worin $R_1$ und $R_2$ die im Anspruch 2 angegebene Bedeutung haben und $X_2$ eine Alkylmercaptogruppe mit 1–6 C bedeuten.

4. Thermoplastische Kunststoffe, enthaltend ein Anthrachinonylaminotriazin gemäß Ansprüchen 1–3.

5. Lineare Polyester, enthaltend ein Anthrachinonylaminotriazin, gemäß Ansprüchen 1–3.

**Claims**

1. A process for the mass colouration of thermoplastics with anthraquinonylaminotriazines of the formula

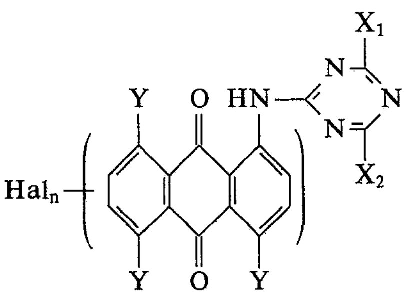

(1)

wherein each of $X_1$ and $X_2$ is an alkylmercapto or arylmercapto group or a group of the formula $-NR_1R_2$, in which each of $R_1$ und $R_2$ is alkyl, cycloalkyl, aralkyl or phenyl substituted by chlorine atoms or $C_1$–$C_6$alkyl or $C_1$–$C_6$alkoxy groups, and $R_2$ can additionally be hydrogen, or $R_1$ and $R_2$ together with the nitrogen atom to which they are attached and optionally a further heteroatom form a 5- or 6-membered hetero-ring; one Y is a hydrogen or chlorine atom, a hydroxy, arylmercapto, alkanoylamino or aroylamino group, or a group of the formula

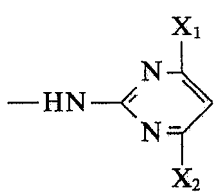

and the other Ys are hydrogen atoms, Hal is a chlorine or bromine atom, and n is 0 or 1.

2. A process according to claim 1, wherein a start is made from a compound of the formula (1), wherein each of $X_1$ and $X_2$ is a group of the formula $-NR_1R_2$, in which $R_1$ and $R_2$ are alkyl groups of 1 to 20 carbon atoms, alkoxyalkyl groups, cycloalkyl groups of 5 to 6 carbon atoms, benzyl or phenylethyl groups or phenyl groups which are unsubstituted or substituted by chlorine atoms, alkyl or alkoxy

groups, each of 1 to 6 carbon atoms, and $R_2$ can additionally be hydrogen.

3. A process according to claim 1, wherein a start is made form a compound of the formula (1), wherein $X_1$ is an alkylmercapto group of 1 to 6 carbon atoms or a group of the formula $-NR_1R_2$, in which $R_1$ and $R_2$ are as defined in claim 2 and $X_2$ is an alkylmercapto group of 1 to 6 carbon atoms.

4. A thermoplastic containing an anthraquinonylaminotriazine according to claims 1 to 3.

5. A linear polyester containing an anthraquinonylaminotriazine according to claims 1 to 3.

**Revendications**

1. Procédé pour teindre des matières thermoplastiques dans la masse, procédé caractérisé en ce qu'on utilise, comme colorants, des anthraquinonylamino-triazines répondant à la formule (1):

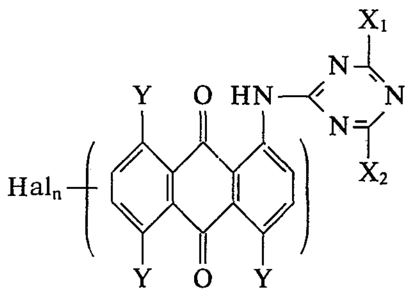

(1)

dans laquelle:

$X_1$ et $X_2$ représentent chacun un radical alkylthio ou arylthio ou un radical $-NR_1R_2$ dans lequel $R_1$ et $R_2$ représentent chacun un alkyle, un cycloalkyle, un aralkyle ou un phényle éventuellement porteur d'atomes de chlore ou de radicaux alkyles ou alcoxy en $C_1$—$C_6$ et $R_2$ peut en outre représenter H, ou dans lequel $R_1$ et $R_2$ forment ensemble et avec l'atome d'azote, éventuellement aussi avec un hétéroatome supplémentaire, un noyau hétérocyclique à 5 ou 6 maillons,

l'un des Y représente un atome d'hydrogène ou de chlore, un radical hydroxy, arylthio, alcanoylamino ou aroylamino, ou un radical de formule:

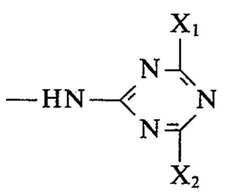

les autres Y représentent chacun un atome d'hydrogène, Hal représente un atome de chlore ou de brome, et n est égal à 0 ou à 1.

2. Procédé selon la revendication 1 caractérisé en ce qu'on part d'un composé de formule 1 dans lequel $X_1$ et $X_2$ représentent chacun un radical $-NR_1R_2$ dans lequel $R_1$ et $R_2$ représentent des radicaux alkyles contenant de 1 à 20 atomes de carbone, des radicaux alcoxyalkyles, des radicaux cycloalkyles contenant 5 ou 6 atomes de carbone, des radicaux benzyles, des radicaux phényléthyles ou des radicaux phényles éventuellement porteurs d'atomes de chlore ou de radicaux alkyles ou alcoxy en $C_1$—$C_6$, et $R_2$ peut en outre représenter H.

3. Procédé selon la revendication 1 caractérié en ce qu'on part d'un composé de formule 1 dans lequel $X_1$ représente un radical alkylthio contenant de 1 à 6 atomes de carbone ou un radical $-NR_1R_2$ dans lequel $R_1$ et $R_2$ ont les significations données à la revendication 2, et $X_2$ représente un radical alkylthio contenant de 1 à 6 atomes de carbone.

4. Matières thermoplastiques contenant une anthraquinonylamino-triazine selon l'une quelconque des revendications 1 à 3.

5. Polyesters linéaires contenant une anthraquinonylamino-triazine selon l'une quelconque des revendications 1 à 3.